# EUROPEAN PATENT APPLICATION

(11) **EP 4 224 618 A1**
(43) Date of publication of application: **09.08.2023**
(21) Application number: 21881342.6
(22) Date of filing: 20.10.2021
(51) Int. Cl.: H01M 50/548

(54) **BATTERY CELL, BATTERY, ELECTRICAL DEVICE, AND PREPARATION METHOD AND APPARATUS FOR BATTERY CELL**

(71) Applicant: Contemporary Amperex Technology Co., Limited, Ningde City, Fujian 352100 (CN)
(72) Inventor: FANG, Kun, Ningde, Fujian 352000 (CN); GUO, Zhijun, Ningde, Fujian 352000 (CN)
(74) Representative: Herrero & Asociados, S.L.
(86) International application number: PCT/CN2021/125107
(87) International publication number: WO 2023/065186

(57) **Abstract**

The present application relates to a battery cell, a battery, a power consumption device, and a producing method and apparatus of a battery cell. The battery cell includes: a shell including a wall part, the wall part being provided with an electrode lead-out hole; an electrode assembly disposed inside the shell, one end of the electrode assembly facing the wall part being provided with a first tab; an electrode terminal including a terminal body and a first flange, the terminal body passing through the electrode lead-out hole, the first flange protruding from an outer peripheral face of the terminal body in a radial direction of the terminal body, and the first flange being located on an inner side of the wall part to limit movement of the electrode terminal in a direction away from the electrode assembly; and a first current collecting member located between the wall part and the electrode assembly and configured to connect the electrode terminal and the first tab; where the terminal body has a first end face facing the first current collecting member, the first end face is provided with a groove and a connecting region for connecting the first current collecting member, and the groove is located between the connecting region and the first flange.

## Description

### TECHNICAL FIELD

The present application relates to the technical field of batteries, and in particular, to a battery cell, a battery, a power consumption device, and a producing method and apparatus of a battery cell.

### BACKGROUND

In the pursuit of energy conservation and emission reduction, a battery is widely applied to a power consumption device, such as a mobile phone, a computer, an electric vehicle, etc. , and the battery supplies electric energy to the power consumption device. The overcurrent capability and service life of the battery are positively correlated with performance of the power consumption device, and how to improve the overcurrent capability of the battery and the service life of the battery is an important research and development direction in this field.

### SUMMARY

The present application is intended to provide a battery cell, a battery, a power consumption device, and a producing method and apparatus of a battery cell, so as to improve the overcurrent capacity of the battery and the service life of the battery.

Embodiments of the present application are implemented as follows.

In a first aspect, an embodiment of the present application provides a battery cell, which includes: a shell including a wall part, the wall part being provided with an electrode lead-out hole; an electrode assembly being disposed inside the shell, one end of the electrode assembly facing the wall part being provided with a first tab; an electrode terminal including a terminal body and a first flange, the terminal body passing through the electrode lead-out hole, the first flange protruding from an outer peripheral face of the terminal body in a radial direction of the terminal body, and the first flange being located on an inner side of the wall part to limit movement of the electrode terminal in a direction away from the electrode assembly; and a first current collecting member located between the wall part and the electrode assembly and configured to connect the electrode terminal and the first tab; where the terminal body has a first end face facing the first current collecting member, the first end face is provided with a groove and a connecting region for connecting the first current collecting member, and the groove is located between the connecting region and the first flange.

In a technical solution provided in the present application, a groove is provided between a connecting region and a first flange, and the groove can release stress received by the first flange, which avoids deformation of the connecting region due to transfer of the stress received by the first flange to the connecting region, ensures flatness the connecting region, further improve connection reliability between the connecting region and a first current collecting member, avoids a connection failure between an electrode terminal and the first current collecting member, prevents an internal circuit of a battery cell from being disconnected, ensures stable overcurrent between the electrode terminal and the first current collecting member, and improves the overcurrent capability of the battery cell and the service life of the battery cell.

In an embodiment of the present application, the groove is an annular groove disposed around the connecting region.

In the above technical solution, the groove surrounds the connecting region, or the groove is enclosed on the first end face, and a region enclosed by the groove forms the connecting region to limit transfer of stress in any direction to the connecting region, which ensures the flatness of the connecting region.

In an embodiment of the present application, the electrode assembly is a winding structure, and the first current collecting member covers a winding center hole of the electrode assembly.

In the above technical solution, a position of the first current collecting member for connecting the connecting region is exposed to the winding center hole, and the first current collecting member can be welded to the connecting region using a welding tool passing through the winding center hole, so that a weld mark is located inside the battery cell to avoid exposing the weld mark outside, which prevents the weld mark from being oxidized by the outside air and rusting, and increases service life of a battery.

In an embodiment of the present application, the first current collecting member includes a current collecting body and a protruding part, the protruding part protrudes from the current collecting body in a direction of the electrode terminal, the protruding part corresponds to a position of the winding center hole of the electrode assembly and is configured to connect the connecting region, and the current collecting body is configured to connect the first tab.

In the above technical solution, by providing a protruding part higher than the current collecting body, interference of a structure other than the current collecting body and the connecting region of the electrode terminal is prevent, and it is ensured that the protruding part is in close contact with the connecting region; and further, a force can be applied on the protruding part though the winding center hole or the protruding part can be welded through the winding center hole, so that the protruding part is tightly connected to the connecting region, which further increases connection strength and a connection area between the first current collecting member and the connecting region, achieves the stable overcurrent, and improves overcurrent capability of the battery and increases the service life of the battery.

In an embodiment of the present application, an outer diameter of the groove is greater than a diameter of the protruding part.

The outer diameter of the groove refers to a diameter of an outer groove wall of the groove. In the above technical solution, in a direction of a central axis of the terminal body, projection of the protruding part on the first end face falls within a region enclosed by the outer groove wall, which avoids interference of a structure other than the protruding part and the connecting region, and ensures that the protruding part and the connecting region are tightly connected without gaps.

In an embodiment of the present application, an inner diameter of the groove is less than a diameter of the protruding part.

In the above technical solution, the inner diameter of the groove refers to a diameter of an inner groove wall of the groove, and by making the diameter of the inner groove wall of the groove less than the diameter of the protruding part, it is ensured that the connecting region is covered completely by the protruding part, which maximizes the use of the connecting region, and maximizes the ensuring of an overcurrent area.

In an embodiment of the present application, the protruding part includes an end wall and a peripheral wall, the peripheral wall is disposed around the end wall, the peripheral wall is connected to the current collecting body, the end wall is connected to the connecting region, and the peripheral wall and the end wall together enclose a concave chamber.

In the above technical solution, by providing a face of the protruding part away from the wall part with a concave chamber, the position of the protruding part is marked by the concave chamber on a surface of the first current collecting member away from the wall part, so as to weld the end wall and the connecting region from one side of the first current collecting member away from the wall part. The concave chamber is further configured to position a welding head to avoid deviation of the welding head, which ensures the stable connection between the protruding part and the connecting region. Compared with the case that a back face of the protruding part is not provided with a concave chamber, by providing the concave chamber, the thickness of the end wall is reduced, which facilitates penetration welding.

In an embodiment of the present application, a diameter of the concave chamber is greater than a diameter of the winding center hole.

In the above technical solution, the concave chamber completely covers one end of the winding center hole, the welding head does not interfere with the current collecting body after passing through the winding center hole, and the welding head can smoothly enter the concave chamber to weld the end wall and the connecting region. Moreover, in a case that the diameter of the concave chamber is constant, by reducing the diameter of the winding center hole of the electrode assembly to be less than the diameter of the concave chamber, the space ratio of the electrode assembly can be increased, and energy density of the battery cell is improved.

In an embodiment of the present application, one side of the electrode terminal facing the first current collecting member is provided with an inclined face, and the inclined face is inclined relative to a plane perpendicular to a direction of a central axis of the electrode terminal and extends from an outer groove wall of the groove in a direction close to the electrode assembly.

In the above technical solution, by providing an periphery of the outer groove wall of the groove with an inclined face, the first current collecting member is avoided, and the first current collecting member is guided to move toward the connecting region to accurately position the first current collecting member, which ensures that the first current collecting member is connected to the connecting region.

In an embodiment of the present application, the electrode terminal further includes a second flange, the second flange protrudes from an outer peripheral face of the terminal body in the radial direction of the terminal body, and the second flange is located on an outer side of the wall part to limit movement of the electrode terminal in a direction of the electrode assembly.

In the above technical solution, under the action of the first flange and the second flange, the movement of the electrode terminal along the central axis of the terminal body is limited, so that the electrode terminal is positioned in the axial direction to avoid a shake of the electrode terminal in the axial direction, which further ensures that the electrode terminal and the first current collecting member are connected stably.

In an embodiment of the present application, the battery cell further includes an insulating member, and the insulating member is disposed between the electrode terminal and the wall part to isolate the electrode terminal from the wall part in an insulating manner.

In the above technical solution, by providing an insulating member, the wall part is prevented from being charged, which reduces the risk of short circuit, and further improves the safety of the battery cell and increases the service life of the battery cell.

In an embodiment of the present application, one side of the second flange facing the wall part is provided with an annular protrusion, the annular protrusion is disposed around a central axis of the electrode terminal, and the annular protrusion is configured to squeeze a portion of the insulating member located between the second flange and the wall part.

In the above technical solution, the insulating member is squeezed by the annular protrusion to form an annular sealing region between the second flange and the wall part, which prevents liquid leakage from a gap between the electrode terminal and the wall part, and increases the service life of the battery cell.

In an embodiment of the present application, projection of the first flange on the second flange covers the annular protrusion in a thickness direction of the wall part.

In the above technical solution, the first flange is supported on the inner side of the wall part to avoid deformation of the wall part due to the squeeze of the annular protrusion on the outer side, and the wall part cooperates with the annular protrusion to squeeze the insulating member, which eliminates the gap between the electrode terminal and the wall part, and improves the sealing effect.

In an embodiment of the present application, the shell includes a housing and an end cover, the housing includes a bottom wall and a side wall, the side wall is disposed around the bottom wall, one end of the side wall is connected to the bottom wall, the other end of the side wall encloses an opening opposite to the bottom wall, the end cover covers the opening, and the wall part is the bottom wall or the end cover.

In the above technical solution, the wall part can be the end cover or the bottom wall of the housing, and no matter whether the electrode terminal is disposed on the end cover or the bottom wall of the housing, the flatness of the connecting region can be ensured.

In an embodiment of the present application, the electrode terminal is insulated from the wall part, one end of the electrode assembly away from the wall part is provided with a second tab, and a polarity of the second tab is opposite to that of the first tab.

The battery cell further includes a second current collecting member, and the second current collecting member is configured to electrically connect the second tab and the wall part.

In the above technical solution, the electrode terminal and the wall part are located at the same end of the battery cell, and the electrode terminal and the wall part carry opposite charges. Therefore, bus members with opposite polarities can be connected at the same end of the battery cell, which facilitates the assembly and connection.

In a second aspect, an embodiment of the present application provides a battery, which includes the foregoing battery cell.

In a third aspect, an embodiment of the present application provides a power consumption device, which includes the foregoing battery.

In a fourth aspect, an embodiment of the present application provides a producing method of a battery cell, which includes: providing an electrode assembly, one end of the electrode assembly being provided with a first tab; providing a housing and an electrode terminal, the housing including a bottom wall and a side wall, the side wall being disposed around the bottom wall, one end of the side wall being connected to the bottom wall, the other end of the side wall enclosing an opening opposite to the bottom wall, the bottom wall being provided with an electrode lead-out hole, the electrode terminal including a terminal body and a first flange, the terminal body passing through the electrode lead-out hole, the first flange protruding from an outer peripheral face of the terminal body in a radial direction of the terminal body, the first flange being located on an inner side of the bottom wall to limit movement of the electrode terminal in a direction away from the electrode assembly, the terminal body having a first end face facing an interior of the housing, the first end face being provided with a groove and a connecting region, and the groove being located between the connecting region and the first flange; providing a first current collecting member, and connecting the first current collecting member to the first tab; placing the electrode assembly and the first current collecting member in the housing so that the first current collecting member is located between the bottom wall and the electrode assembly; connecting the first current collecting member to the connecting region; and providing an end cover, and covering the opening of the housing with the end cover.

In an embodiment of the present application, the step of connecting the first current collecting member to the first tab is done before the step of placing the electrode assembly in the housing.

In the above technical solution, the first current collecting member and the electrode assembly enter the housing after being connected integrally, which ensures that the first current collecting member and the first tab are connected stably, and improves the overcurrent capability of the battery cell.

In an embodiment of the present application, the connecting the first current collecting member to the connecting region includes: welding the first current collecting member and the connecting region through a welding unit entering the housing from the opening and passing through a winding center hole of the electrode assembly.

In the above technical solution, a weld mark of the first current collecting member and the electrode terminal is located inside the battery cell, and the weld mark is in no contact with the outside air, is not easily oxidized and does not rust, which improves the service life of the battery.

In a fifth aspect, an embodiment of the present application provides a producing apparatus of a battery cell, which includes: a first providing apparatus configured to provide an electrode assembly, one end of the electrode assembly being provided with a first tab; a second providing apparatus configured to provide a housing and an electrode terminal, the housing including a bottom wall and a side wall, the side wall being disposed around the bottom wall, one end of the side wall being connected to the bottom wall, the other end of the side wall enclosing an opening opposite to the bottom wall, the bottom wall being provided with an electrode lead-out hole, the electrode terminal including a terminal body and a first flange, the terminal body passing through the electrode lead-out hole, the first flange protruding from an outer peripheral face of the terminal body in a radial direction of the terminal body, the first flange being located on an inner side of the bottom wall to limit movement of the electrode terminal in a direction away from the electrode assembly, the terminal body having a first end face facing an interior of the housing, the first end face being provided with a groove and a connecting region, and the groove being located between the connecting region and the first flange; a third providing apparatus configured to provide a first current collecting member; a fourth providing apparatus configured to provide an end cover; and a first assembling apparatus configured to connect the first current collecting member to the first tab; a second assembling apparatus configured to place the electrode assembly and the first current collecting member in the housing so that the first current collecting member is located between the bottom wall and the electrode assembly; a third assembling apparatus configured to connect the first current collecting member to the connecting region; and a fourth assembling apparatus configured to cover the opening of the housing with the end cover.

In an embodiment of the present application, the third assembling apparatus is configured to weld the first current collecting member to the connecting region, the third assembling apparatus includes a welding unit, and the welding unit is configured to enter the housing and pass through a winding center hole of the electrode assembly to weld the first current collecting member and the connecting region.

In a sixth aspect, an embodiment of the present application provides an assembling method of a housing and an electrode terminal, which includes: providing a housing, the housing including a bottom wall and a side wall, the side wall being disposed around the bottom wall, one end of the side wall being connected to the bottom wall, the other end of the side wall enclosing an opening opposite to the bottom wall, and the bottom wall being provided with an electrode lead-out hole; providing an electrode terminal, the electrode terminal including a terminal body and a first flange, the terminal body having a first end face, the first flange protruding from the first end face in a direction of a central axis of the terminal body, the first flange being disposed around the first end face, the first end face being provided with a groove and a connecting region, and the groove being located between the connecting region and the first flange; and passing the electrode terminal through the electrode lead-out hole so that the first flange is located on an inner side of the bottom wall, and bending the first flange so that the first flange protrudes from an outer peripheral face of the terminal body in a radial direction of the electrode terminal to limit movement of the electrode terminal toward an outer side of the bottom wall through the first flange.

In the above technical solution, the first flange initially protrudes from the first end face in the direction of the central axis of the terminal body, so that one end of the electrode terminal having the first flange can pass through the electrode lead-out hole and be located inside the shell; and the first flange is folded outward after being bent, and the first flange protrudes from the outer peripheral face of the terminal body in the radial direction of the terminal body, so that the electrode terminal cannot move toward the exterior of the housing, which achieves installation of the electrode terminal and the housing. Meanwhile, by providing the first end face of the terminal body with a groove, the groove is located between the connecting region and the first flange, and the stress received by the first flange is released at the groove in the process of bending the first flange, which avoids transfer of the stress to the connecting region, and ensures the flatness the connecting region. Moreover, the first flange is squeezed in the process of bending the first flange, the material flows to the surroundings" and since the groove is provided between the first flange and the connecting region, the flowing material is squeezed and then absorbed by the groove, which avoids entering the connecting region, and ensures that the connecting region is flat and not deformed.

In a seventh aspect, an embodiment of the present application provides an assembling apparatus of a housing and an electrode terminal, which includes: a fifth providing apparatus configured to provide a housing, the housing including a bottom wall and a side wall, the side wall being disposed around the bottom wall, one end of the side wall being connected to the bottom wall, the other end of the side wall enclosing an opening opposite to the bottom wall, and the bottom wall being provided with an electrode lead-out hole; a sixth providing apparatus configured to provide an electrode terminal, the electrode terminal including a terminal body and a first flange, the terminal body having a first end face, the first flange protruding from the first end face in a direction of a central axis of the terminal body, the first flange being disposed around the first end face, the first end face being provided with a groove and a connecting region, and the groove being located between the connecting region and the first flange; and a fifth assembling apparatus configured to pass the electrode terminal through the electrode lead-out hole so that the first flange is located on an inner side of the bottom wall, and to bend the first flange so that the first flange protrudes from an outer peripheral face of the terminal body in a radial direction of the electrode terminal to limit movement of the electrode terminal toward an outer side of the bottom wall through the first flange.

### BRIEF DESCRIPTION OF DRAWINGS

In order to illustrate technical solutions in embodiments of the present application more clearly, brief description will be made below to accompanying drawings required in the embodiments. It should be understood that the following accompanying drawings illustrate some embodiments of the present application only, and thus should not be considered as limitation on the scope. Other related drawings could be obtained based on these accompanying drawings by those of ordinary skilled in this art without creative efforts.
FIG. 1 is a schematic structural diagram of a vehicle provided in an embodiment of the present application;
FIG. 2 is an exploded view of a battery provided in an embodiment of the present application;
FIG. 3 is a perspective view of a battery cell provided in an embodiment of the present application;
FIG. 4 is an exploded view of a battery cell provided in an embodiment of the present application;
FIG. 5 is a cross-sectional view of a battery cell provided in an embodiment of the present application;
FIG. 6 is a schematic structural diagram of an electrical connection between an electrode terminal and a first tab provided in an embodiment of the present application;
FIG. 7 is a perspective view of an electrode terminal provided in an embodiment of the present application;
FIG. 8 is a schematic plan diagram of a face of an electrode terminal facing a first current collecting member provided in an embodiment of the present application;
FIG. 9 is a schematic plan diagram of a face of an electrode terminal facing a first current collecting member provided in another embodiment of the present application;
FIG. 10 is a schematic plan diagram of a face of an electrode terminal facing a first current collecting member provided in a further embodiment of the present application;
FIG. 11 is a schematic plan diagram of a face of an electrode terminal facing a first current collecting member provided in yet another embodiment of the present application;
FIG. 12 is a perspective view of a first current collecting member provided in an embodiment of the present application;
FIG. 13 is a cross-sectional view of a first current collecting member provided in an embodiment of the present application;
FIG. 14 is an enlarged view of a part A of FIG. 5;
FIG. 15 is a schematic flowchart of a producing method of a battery cell provided in an embodiment of the present application;
FIG. 16 is a schematic diagram of a welding process of a first current collecting member and a connecting region provided in an embodiment of the present application;
FIG. 17 is a schematic block diagram of a producing apparatus of a battery cell provided in an embodiment of the present application;
FIG. 18 is a schematic flowchart of an assembling method of a housing and an electrode terminal provided in an embodiment of the present application;
FIG. 19 is a schematic structural diagram of a housing and an electrode terminal in initial states provided in an embodiment of the present application;
FIG. 20 is a schematic diagram of an assembling process of a housing and an electrode terminal provided in an embodiment of the present application;
FIG. 21 is a schematic structural diagram of assembly of a housing and an electrode terminal provided in an embodiment of the present application; and
FIG. 22 is a schematic block diagram of an assembling apparatus of a housing and an electrode terminal provided in an embodiment of the present application.

Reference signs: 1000-vehicle; 100-battery; 101-box; 1011-first box portion; 1012-second box portion; 1-battery cell; 11-shell; 11a-wall part; 11b-electrode lead-out hole; 111-housing; 1111-side wall; 1112-bottom wall; 112-end cover; 12-electroed assembly; 121-main body part; 122-firsttab; 123-second tab; 124-winding center hole; 13-electrode terminal; 131-terminal body; 1311-first end face; 13111-connecting region; 13112-grove; 13112a-inner groove wall; 13112b-outer groove wall; 132-first flange; 133-inclined face; 134-second flange; 1341-annular protrusion; 14-first current collecting member; 141-current collecting body; 142-protruding part; 1421-peripheral wall; 1422-end wall; 1423-concave chamber; 15-second current collecting member; 151-through hole; 16-insulating member; 161-first portion; 162-second portion; 163-third portion; 200-motor; 300-controller; 400-producing apparatus; 401-first providing apparatus; 402-second providing apparatus; 403-third providing apparatus; 404-fourth providing apparatus; 405-first assembling apparatus; 406-second assembling apparatus; 407-third assembling apparatus; 4071-welding unit; 408-fourth assembling apparatus; 500-assembling apparatus; 501-fifth providing apparatus; 502-sixth providing apparatus; 503-fifth assembling apparatus; 5031-compressing mechanism; D1-outer diameter of a groove; D2- inner diameter of a groove; D3-diameter of a protruding part; D4-diameter of a concave chamber; D5-diameter of a winding center hole; P-direction of a central axis of a terminal body; and R-radial direction of a terminal body.

### DESCRIPTION OF EMBODIMENTS

To make the objectives, technical solutions and advantages of the embodiments of the present application clearer, the technical solutions in the embodiments of the present application will be clearly described below with reference to the accompanying drawings in the embodiments of the present application. Apparently, the described embodiments are merely some but not all of the embodiments of the present application. All of other embodiments obtained by those of ordinary skill in the art based on the embodiments of the present application without inventive efforts shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions. The terms "first", "second" and the like in the specification and the claims of the present application or the above drawings are used to distinguish different objects, rather than to describe a specific order or primary-secondary relationship.

The phrase "embodiment" mentioned in the present application means that the specific features, structures, and characteristics described with reference to the embodiments may be included in at least one embodiment of the present application. The phrase at various locations in the specification does not necessarily refer to the same embodiment, or an independent or alternate embodiment that is mutually exclusive from another embodiment.

In the description of the present application, it should be noted that, unless explicitly specified and defined otherwise, terms "installation", "interconnection", "connection" and "attachment" should be understood broadly, for example, they may either be a fixed connection, or a detachable connection, or an integral connection; and they may either be a direct connection, or an indirect connection through an intermediary, and they may be an internal connection between two elements. Those of ordinary skill in the art may appreciate the specific meanings of the foregoing terms in the present application according to specific conditions.

In the present application, the term "and/or" is only an association relation describing associated objects, which means that there may be three relations. For example, A and/or B may represent three situations: A exists, both A and B exist, and B exists. In addition, the character "/" in the present application generally indicates that the associated objects before and after the character are in an "or" relationship.

In the embodiments of the present application, same components are denoted by same reference signs, and detailed description of the same components is omitted in different embodiments for brevity. It should be understood that dimensions such as thicknesses, lengths and widths of various components in embodiments of the present application shown in the drawings, as well as dimensions of the overall thickness, length and width of an integrated apparatus are merely illustrative, and should not constitute any limitation on the present application.

In the present application, "a plurality of" means two or more (including two).

In the present application, a battery cell may include a lithium-ion secondary battery cell, a lithium-ion primary battery cell, a lithium-sulfur battery cell, a sodium/lithium-ion battery cell, a sodium-ion battery cell or a magnesium-ion battery cell, etc., which is not limited in the embodiments of the present application.

The battery mentioned in the embodiments of the present application refers to a single physical module including one or more battery cells to provide a higher voltage and capacity. For example, the battery mentioned in the present application may include a battery module, a battery pack or the like. The battery generally includes a box for packaging one or more battery cells. The box can avoid liquid or other foreign matters to affect charging or discharging of the battery cell.

The battery cell includes an electrode assembly and an electrolyte, and the electrode assembly includes a positive electrode sheet, a negative electrode sheet and an isolating member. The operation of the battery cell mainly relies on movement of metal ions between the positive electrode sheet and the negative electrode sheet. The positive electrode sheet includes a positive electrode current collector and a positive electrode active material layer, and the positive electrode active material layer is coated on a surface of the positive electrode current collector; and the positive electrode current collector includes a positive electrode current collecting part and a positive electrode tab, the positive electrode current collecting part is coated with the positive electrode active material layer, and the positive electrode tab is not coated with the positive electrode active material layer. In an example of a lithium-ion battery, the material of the positive electrode current collector may be aluminum, the positive electrode active material layer includes a positive electrode active material, and the positive electrode active material may be lithium cobalt oxides, lithium iron phosphate, ternary lithium, lithium manganate, or the like. The negative electrode sheet includes a negative electrode current collector and a negative electrode active material layer, and the negative electrode active material layer is coated on a surface of the negative electrode current collector; and the negative electrode current collector includes a negative electrode current collecting part and a negative electrode tab, the negative electrode current collecting part is coated with the negative electrode active material layer, and the negative electrode tab is not coated with the negative electrode active material layer. The material of the negative electrode current collector may be copper, the negative electrode active material layer includes a negative electrode active material, and the negative electrode active material may be carbon, silicon, or the like. A material of the isolating member may be PP (polypropylene, polypropylene), PE (polyethylene, polyethylene), or the like.

The battery cell further includes a shell for accommodating an electrode assembly, and an electrode terminal, the electrode terminal is mounted on the shell, and the electrode terminal is configured to electrically connect the electrode assembly to achieve charging and discharging of the electrode assembly.

The battery cell further includes a current collecting member, and the current collecting member is configured to electrically connect a tab of the battery cell and the electrode terminal to transmit electric energy from the electrode assembly to the electrode terminal, and then to an exterior of the battery cell through the electrode terminal; and a plurality of battery cells are electrically connected through a bus component to achieve a series connection, a parallel connection or a parallel-series connection of the plurality of battery cells.

The current collecting member is an important component of the battery cell for achieving stable current transfer, the damage of the connecting part of the current collecting member to the tab or the electrode terminal or the poor connection between the current collecting member and the tab or the electrode terminal results in unstable overcurrent of the battery cell, and easily results in an increase of an internal resistance of the connecting part and heating damage, which affects the service life of the battery. The inventor notes that an end face of the electrode terminal located at one end in the shell is configured to connect the current collecting member, thus, the flatness of the end face of the electrode terminal is an important factor to ensure the stable connection between the electrode terminal and the current collecting member, and the end face of the electrode terminal is easily deformed due to the force received by an outer periphery of the electrode terminal.

In view of this, an embodiment of the present application provides a technical solution. The electrode terminal includes a terminal body and a first flange, the terminal body passes through a wall part of the shell, the first flange protrudes from an outer peripheral face of the terminal body in a radial direction of the terminal body, the first flange is located one an inner side of the wall part (that is, inside the shell), the first flange directly or indirectly abuts against the inner side of the wall part to limit movement of the electrode terminal toward an outer side of the wall part, the terminal body has a first end face facing the current collecting member, the first end face is provided with a groove and a connecting region, and the groove is located between the connecting region and the first flange; and the groove can release stress received by the first flange to avoid transfer of the stress received by the first flange to the connecting region, which ensures that the connecting region is flat and not deformed, thereby ensuring reliable connection between the between the electrode terminal and the current collecting member, avoiding a connection failure between the electrode terminal and a first current collecting member, and preventing an internal circuit of the battery cell from being disconnected to ensure stable overcurrent between the electrode terminal and the first current collecting member, thereby improving overcurrent capability of the battery cell and increasing service life of the battery cell.

The technical solution described in the embodiment of the present application is applicable to a battery and a power consumption device using a battery.

The power consumption device may be a vehicle, a mobile phone, a portable device, a notebook computer, a ship, a spacecraft, an electric toy, an electric tool, or the like. The vehicle may be a fuel-powered vehicle, a gas-powered vehicle or a new energy vehicle, and the new energy vehicle may be a battery electric vehicle, a hybrid vehicle, an extended-range vehicle, or the like; the spacecraft includes an airplane, a rocket, a space shuttle, a spaceship, and the like; the electric toy includes a fixed or mobile electric toy, such as a game console, an electric vehicle toy, an electric ship toy and an electric airplane toy; and the electric tool includes a metal cutting power tool, a grinding power tool, an assembly power tool and a railway power tool, such as an electric drill, an electric grinder, an electric wrench, an electric screwdriver, an electric hammer, an electric impact drill, a concrete vibrator and an electric planer. The above power consumption device is not specially limited in the embodiments of the present application.

For convenience of description, the following embodiments will be explained by an example that the power consumption is a vehicle.

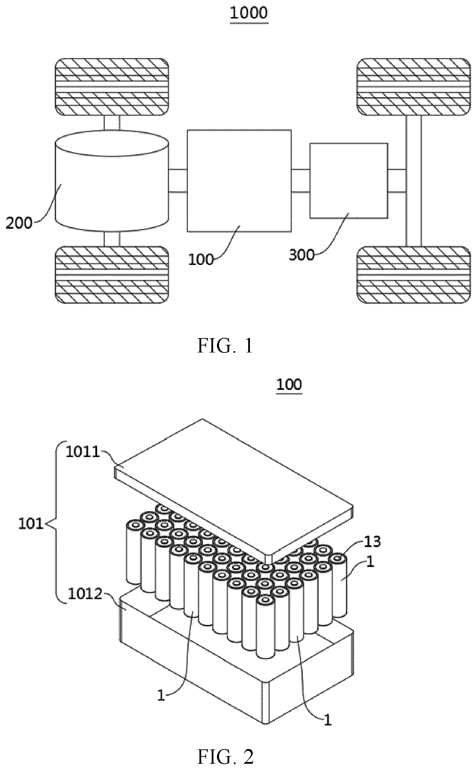

As shown in FIG. 1, FIG. 1 shows a vehicle 1000 according to an embodiment of the present application. The vehicle 1000 may be a fuel-powered vehicle, a gas-powered vehicle or a new energy vehicle, and the new energy vehicle may be a battery electric vehicle, a hybrid vehicle, an extended-range vehicle, or the like. A battery 100, a controller 300 and a motor 200 may be disposed inside the vehicle 1000, and the controller 300 is configured to control the battery 100 to supply power to the motor 200. For example, the battery 100 may be disposed at the bottom, head or tail of the vehicle 1000. The battery 100 may be configured to supply power to the vehicle 1000. For example, the battery 100 may be used as an operation power supply of the vehicle 1000 and is used for a circuit system of the vehicle 1000, for example, for a working power demand of the vehicle 1000 during startup, navigation and running. In another embodiment of the present application, the battery 100 may be used not only as an operation power supply of the vehicle 1000, but also as a driving power supply of the vehicle 1000, replacing or partially replacing fuel or natural gas to provide driving power for the vehicle 1000.

In order to meet different power usage demands, as shown in FIG. 2, the battery 100 may include a plurality of battery cells 1, where the plurality of battery cells 1 may be in series connection, parallel connection or series-parallel connection. The series-parallel connection refers to a combination of series connection and parallel connection. The battery 100 may also be referred to as a battery 100 pack. Optionally, the plurality of battery cells 1 may be first connected in series, in parallel or in series and parallel to constitute a battery module, and then a plurality of battery modules are connected in series, in parallel or in series and parallel to constitute a battery 100. That is, the plurality of battery cells 1 may directly constitute a battery 100, or may first constitute a battery module, and then battery modules constitute a battery 100.

The battery 100 may further include a box 101 (or a covering), an interior of the box 101 is a hollow structure, and the plurality of battery cells 1 are accommodated in the box 101. The box 101 may include two portions for accommodation (with reference to FIG. 2), which are referred to as a first box portion 1011 and a second box portion 1012, respectively, and the first box portion 1011 and the second box portion 1012 are fastened together. The shapes of the first box portion 1011 and the second box portion 1012 may be determined according to the shape of the plurality of combined battery cells 1, and the first box portion 1011 and the second box portion 1012 each may have an opening. For example, the first box portion 1011 and the second box portion 1012 each may be a hollow cuboid and have only one surface with an opening, and the opening of the first box portion 1011 is arranged opposite to the opening of the second box portion 1012. The first box portion 1011 and the second box portion 1012 are fastened to each other to form a box 101 with a closed chamber. One of the first box portion 1011 and the second box portion 1012 may be a cuboid having an opening, and the other one is a cover plate structure to close the opening of the cuboid. The plurality of battery cells 1 are combined in parallel connection or series connection or series-parallel connection and then placed in the box 101 formed by fastening the first box portion 1011 to the second box portion 1012.

Optionally, the battery 100 may further include another structure. For example, the battery 100 may further include a bus component (not shown in the drawings), and the bus component is configured to implement the electrical connection between the plurality of battery cells 1, such as parallel connection, series connection or series-parallel connection. Specifically, the bus component may implement the electrical connection between the battery cells 1 by connecting electrode terminals 13 of the battery cells 1. Furthermore, the bus component may be fixed to the electrode terminals 13 of the battery cells 1 by means of welding. Electric energy of the plurality of battery cells 1 may be further led out through an electrically conductive mechanism to pass through the box 101. Optionally, the electrically conductive mechanism may also belong to the bus component.

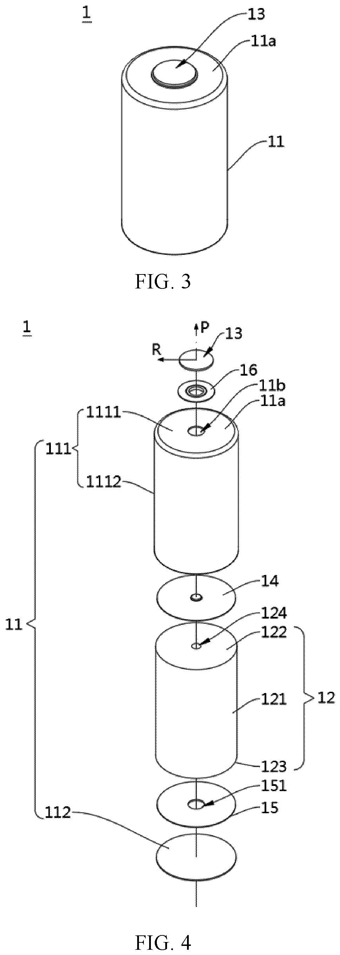

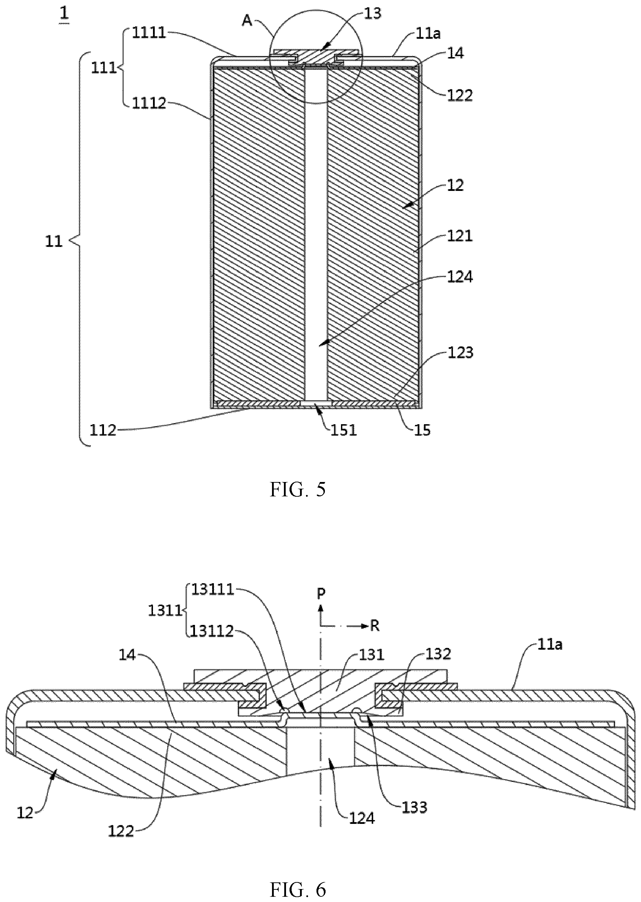

Any one of the battery cells 1 will be described in detail below. As shown in FIG. 3, FIG. 4, FIG. 5 and FIG. 6, the battery cell 1 includes an electrode assembly 12, a shell 11, an electrode terminal 13 and a first current collecting member 14. As shown in FIG. 4 and FIG. 5, the shell includes a wall part 11a, the wall part 11a is provided with an electrode lead-out hole 11b, the electrode assembly 12 is disposed inside the shell 11, and one end of the electrode assembly 12 facing the wall part 11a is provided with a first tab 122. As shown in FIG. 6, the electrode terminal 13 includes a terminal body 131 and a first flange 132, the terminal body 131 passes through the electrode lead-out hole 11b, the first flange 132 protrudes from an outer peripheral face of the terminal body 131 in a radial direction of the terminal body R, and the first flange 132 is located on an inner side of the wall part 11a to limit movement of the electrode terminal 13 in a direction away from the electrode assembly 12. The first current collecting member 14 is located between the wall part 11a and the electrode assembly 12 and configured to connect the electrode terminal 13 and the first tab 122. The terminal body 131 has a first end face 1311 facing the first current collecting member 14, the first end face 1311 is provided with a groove 13112 and a connecting region 13111 for connecting the first current collecting member 14, and the groove 13112 is located between the connecting region 13111 and the first flange 132.

The electrode assembly 12 includes a first electrode sheet, a second electrode sheet and a separator, and the separator is used to separate the first electrode sheet from the second electrode sheet. The polarity of the first electrode sheet is opposite to that of the second electrode sheet. In other words, one of the first electrode sheet and the second electrode sheet is a positive electrode sheet, and the other one of the first electrode sheet and the second electrode sheet is a negative electrode sheet. The first electrode sheet, the second electrode sheet and the separator are in the prior art. Although they are not shown in the drawings of the specification of the present application, those skilled in the art should understand their specific structures. From the appearance of the electrode assembly 12, the electrode assembly 12 includes a main body part 121, a first tab 122 and a second tab 123, and the first tab 122 and the second tab 123 protrude from the main body part 121. The first tab 122 is a portion of the first electrode sheet that is not coated with the active material layer, and the second tab 123 is a portion of the second electrode sheet that is not coated with the active material layer. The first tab 122 and the second tab 123 can extend from the same side of the main body part 121, or extend from two opposite sides, respectively. Exemplarily, as shown in FIG. 4 and FIG. 5, the first tab 122 and the second tab 123 are disposed at both ends of the main body part 121, respectively, that is, the first tab 122 and the second tab 123 are located at both ends of the electrode assembly 12, respectively.

The shell 11 is a hollow structure, and a space for accommodating the electrode assembly 12 is formed inside the shell 11. The shape of the shell 11 can be determined according to the specific shape of the electrode assembly 12. For example, if the electrode assembly 12 is a cylindrical structure, the shell 11 can be selected as a cylindrical housing; and if the electrode assembly 12 is a cuboid structure, the shell 11 can be selected as a cuboid housing. Optionally, both of the electrode assembly 12 and the shell 11 are cylinders. The wall part 11a is an end wall at one end of the shell 11, the wall part 11a faces the first tab 122 of the electrode assembly 12, and one end of the shell 11 away from the wall part 11a faces the second tab 123 of the electrode assembly 12.

The electrode lead-out hole 11b penetrates the wall part 11a so that the inner side of the wall part 11a is communicated with the outer side of the wall part 11a, the inner side of the wall part 11a is the interior of the shell 11, and the outer side of the wall part 1 1a is the exterior of the shell 11.

The electrode terminal 13 is mounted on the electrode lead-out hole 11b to implement the electrical connection between the first tab 122 of the electrode assembly 12 and an external bus component.

The terminal body 131 passes through the electrode lead-out hole 11b, which means that one end of the terminal body 131 is located inside the shell 11, and the other end is located outside the shell 11, that is, both ends of the terminal body 131 are located on both sides of the wall part 11a. One end of the terminal body 131 located on the inner side of the wall part 11a is configured to connect the first tab 122, and one end of the terminal body 131 located on the outer side of the wall part 11a is configured to connect the external bus component. The shape of the terminal body 131 is not limited, and it may be a cylinder, or a polygonal cylinder, or another special-shaped cylinder. Optionally, the shape of the terminal body 131 is cylindrical.

The first end face 1311 is an end face of the terminal body 131 located at one end of the inner side of the wall part 11a, and the connecting region 13111 is a middle region of the first end face 1311. A region between the first flange 132 and the connecting region 13111 is recessed from the first end face 1311 in a direction of a central axis of the terminal body P, to form the groove 13112.

The central axis of the terminal body 131 is perpendicular to the first end face 1311, the direction of the central axis of the terminal body P can be seen in FIG. 6, and the radial direction of the terminal body R refers to a direction perpendicular to the direction of the central axis of the terminal body P.

The first flange 132 is a protrusion disposed on the outer peripheral face of the terminal body 131, that is, the first flange 132 protrudes from the outer peripheral face of the terminal body 131 relative to the radial direction of the terminal body R. The first flange 132 is located at one end of the terminal body 131 located on the inner side of the wall part 11a, the first flange 132 directly or indirectly abuts against the wall part 11a to prevent the terminal body 131 from moving to the outer side of the wall part 11a, which avoids the terminal body 131 away from the electrode assembly 12 and departure of the terminal body 131 from the wall part 11a. The terminal body 131 and the first flanged 132 may be integrally molded, or may be two portions connected by means of welding, bonding or the like after being molded respectively. Optionally, the first flange 132 and the terminal body 131 are integrally molded. The first current collecting member 14 is located between the first tab 122 and the wall part 11a, one face of the first current collecting member 14 facing the electrode assembly 12 is electrically connected to the first tab 122, and one face of the first current collecting member 14 facing the wall part 11a is electrically connected to the terminal body 131. Optionally, the first current collecting member 14 is a disc-shaped structure, the disc-shaped structure presses against and is electrically connected to the first tab 122 of the electrode assembly 12, the other face of the disc-shaped structure presses against and is electrically connected to the connecting region 13111 on the first end face 1311 of the terminal body 131. The way of electrical connection can be conducting by contact, bonding by conductive glue or welding.

When the connecting region 13111 is not flat, the surface of the first current collecting member 14 is in no complete contact with the surface of the connecting region 13111, there is a gap between the first current collecting member 14 and the connecting region 13111, which results in poor contact, low bonding strength during bonding, occurrence of virtual welding during welding, unstable electrical connection, a small overcurrent area, and poor overcurrent capability, and in severe cases, results in a connection failure between the first current collecting member 14 and the connecting region 13111, and disconnection of an inner circuit of the battery cell 1. By providing the groove 13112 on the first end face 1311 to separate the connecting region 13111 from the first flange 132, the stress received by the first flange 132 is released at the groove 13112, which avoids transfer of the stress to the connecting region 13111, alleviates the problem of deformation of the connecting region 13111 under the action of the stress, ensures the flatness of the connecting region 13111, further alleviates the problem of unstable connection due to the gap between the connecting region 13111 and the first current collecting member 14, and improves the overcurrent capability and prolongs the service life.

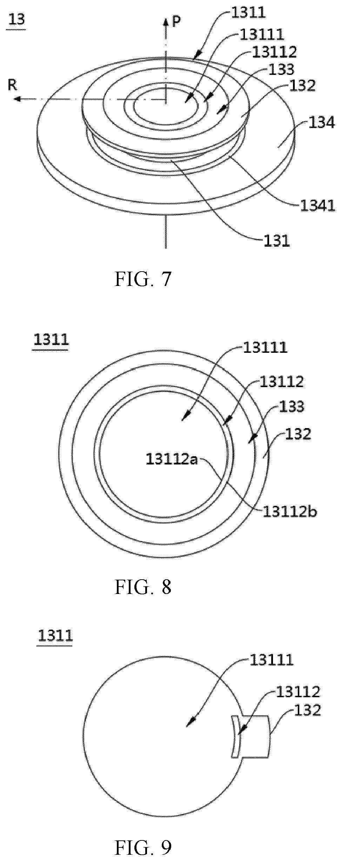

According to some embodiments of the present application, as shown in FIG. 7 and FIG. 8, the groove 13112 is an annular groove disposed around an outer periphery of the connecting region 13111.

As shown in FIG. 7 and FIG. 8, the groove 13112 is a 360° annular structure, the groove 13112 includes an inner groove wall 13112a located on an inner ring and an outer groove wall 13112b located on an outer ring, and the connecting region 13111 is formed in the region enclosed by the inner groove wall 13112a. The shape of the annular groove may be an annular ring, or a polygonal ring.

The stress received by the first flange 132 is transferred to the outer groove wall 13112b of the groove 13112, the space between the outer groove wall 13112b and the inner groove wall 13112a can release the stress received by the first flange 132 to avoid the deformation of the connecting region 13111 connected to the inner groove wall 13112a. By setting the groove 13112 as an annular groove, the region enclosed by the groove 13112 is used as the connecting region 13111, which limits the transfer of the stress in any direction to the connecting region 13111, and further ensures the flatness of the connecting region 13111.

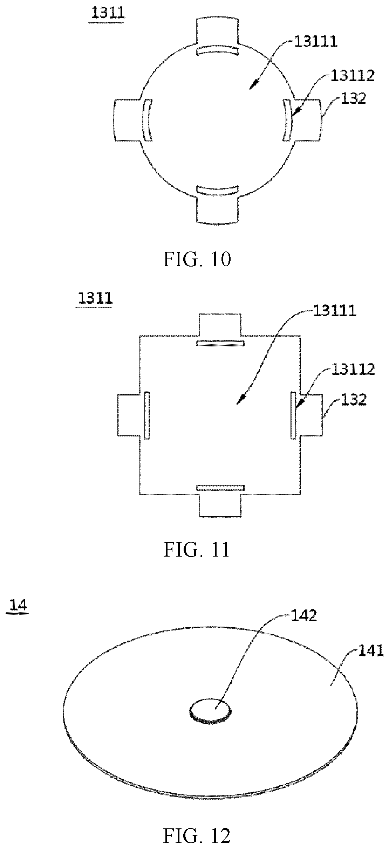

In some embodiments, the groove 13112 may not be an annular groove enclosed at 360°. For example, as shown in FIG. 10, the first end face 1311 is provided with one arc-shaped groove 13112, the groove 13112 extends in a circumferential direction of the terminal body 131, the radian of the groove 13112 is less than 360°, and a first flange 132 protrudes from the outer peripheral face of the terminal body 131 in the radial direction at the position of the corresponding groove 13112. For another example, as shown in FIG. 11, the first end face 1311 is provided with a plurality of arc-shaped grooves 13112 (four arc-shaped grooves 13112 in FIG. 11 as an example) distributed in a circumferential direction of the terminal body 131 at intervals, each groove 13112 extends in the circumferential direction of the terminal body 131, the first flanges 132 includes a plurality of first flanges 132, the plurality of first flanges 132 correspond to the plurality of grooves 13112, and the plurality of grooves 13112 respectively isolate the plurality of first flanges 132 from the connecting region 13111. In some embodiments, the grooves 13112 may not have radian, but are strip-shaped grooves. As shown in FIG. 12, the terminal body 131 is a polygonal cylinder, and the groove 13112 extends in the circumferential direction of the terminal body 131 to form a strip-shaped groove.

According to same embodiments of the present application, as shown in FIG. 6, the electrode assembly 12 is a winding structure, and the first current collecting member 14 covers the winding center hole 124 of the electrode assembly 12.

As described above, the electrode assembly 12 includes the separator and a first electrode sheet and a second electrode sheet with opposite polarities, and the separator is configured to separate the first electrode sheet from the second electrode sheet. The first electrode sheet, the second electrode sheet and the separator are all strip-shaped structures, and the first electrode sheet, the second electrode and the separator are integrally wound around the central axis to form a winding structure. The winding structure may be a cylindrical structure, a flat structure or a structure in another shape. During winding, the first electrode sheet, the second electrode sheet and the separator are wound around a needle to be molded, and the winding center hole 124 is formed at the central axis of the electrode assembly 12 after the needle is drawn out. Optionally, the first tab 122 is wound around the central axis of the electrode assembly 12 in multiple turns, and in other words, the first tab 122 includes multiple turns of tab layers. After the winding is completed, the first tab 122 is generally cylindrical, and a gap is left between two adjacent tab layers. In this embodiment of the present application, the first tab 122 can be processed to reduce the gap between the tab layers, so as to facilitate the connection between the first tab 122 and the first current collecting member 14. For example, in this embodiment of the present application, kneading and flattening processing can be performed on the first tab 122, so that an end region of the first tab 122 away from the main body part 121 is gathered together; a dense end face is formed at the one end of the first tab 122 away from the main body part 121 by kneading and flattening processing, which reduces the gap between the tab layers, and facilitates the connection between the first tab 122 and the first current collecting member 14. Alternatively, in the embodiment of the present application, a conductive material can be filled between two adjacent tab layers to reduce the gap between the tab layers. Optionally, the second tab 123 is wound around the central axis of the electrode assembly 12 in multiple turns, and the second tab 123 includes multiple turns of tab layers. Exemplarily, the second tab 123 is also subjected to the kneading and flatting process to reduce the gap between the tab layers of the second tab 123.

The first current collecting member 14 presses against the kneaded and flattened end face of the first tab 122, a portion of the first current collecting member 14 covers the first tab 122, the other portion is exposed to the winding center hole 124, an external welding device emits laser light to the surface of the first current collecting member 14 away from the first tab 122, and the laser light welds the portion of the first current collecting member 14 covering the first tab 122 to the firs tab 122.

The portion of the first current collecting member 14 exposed to the winding center hole 124 presses against the connecting region 13111, and the first current collecting member 14 can be welded to the connecting region 13111 using a welding tool passing through the winding center hole 124 so that the weld mark is located inside the shell 11 to avoid exposing the weld mark outside, which prevents the weld mark from being oxidized by the outside air and rusting, and increases the service life of the battery 100.

When the first current collecting member 14 is electrically connected to the connecting region 13111 by means of bonding by conductive glue, it is not necessary to indirectly apply pressure toward the wall part 11a on the first current collecting member 14 through the electrode assembly 12, but the pressure can be directly applied on the first current collecting member 14 using a tool passing through the winding center hole 124 to press the first current collecting member 14 tightly against the connecting region, so that the first current collecting member 14 and the connecting region 13111 are stably bonded. The falling of the active material layer coated on the electrode sheet due to the deformation of the electrode assembly 12 by force is avoided, and damage to the electrode assembly 12 is prevented.

According to some embodiments of the present application, as shown in FIG. 6 and FIG. 12, the first current collecting member 14 includes a current collecting body 141 and a protruding part 142, the protruding part 142 protrudes from the current collecting body 141 in the direction of the electrode terminal 13, the protruding part 142 corresponds to a position of the winding center hole 124 of the electrode assembly 12 and is configured to connect the connecting region 13111, and the current collecting body 141 is configured to connect the first tab 122.

The current collecting body 141 is a portion of the first current collecting member 14 covering the first tab 122, and the current collecting body 141 is welded to the first tab 122.

The protruding part 142 protrudes in the direction of the electrode terminal 13 relative to the current collecting body 141 to avoid that the first current collecting member 14 cannot be in close contact with the connecting region 13111 due to interference of a structure other than the current collecting body 141 and the connecting region 13111 of the electrode terminal 13. By providing the protruding part 142, it is ensured that the first current collecting member 14 is in close contact with the connecting region 13111 to avoid poor bonding or poor welding, which achieves stable overcurrent, improves the overcurrent capability of the battery 100 and the service life of the battery 100.

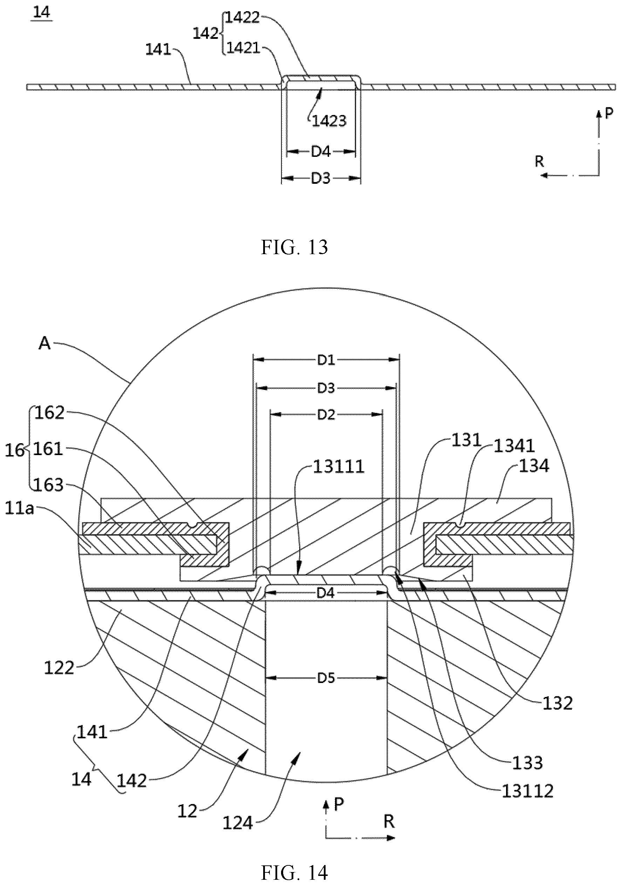

According to some embodiments of the present application, as shown in FIG. 13 and FIG. 14, an outer diameter of the groove D1 is greater than a diameter of the protruding part D3.

As shown in FIG. 7 and FIG. 8, the groove 13112 is an annular ring, and the outer diameter of the groove D1 refers to a diameter of the outer groove wall 13112b of the groove 13112. As shown in FIG. 12 and FIG. 13, the protruding part 142 is a cylinder, and the diameter of the protruding part D3 refers to a diameter of an end face of the cylinder. As shown in FIG. 8 and FIG. 14, an area of the region enclosed by the outer groove wall 13112b of the groove 13112 is greater than an area of a face of the protruding part 142 facing the connecting region 13111, and in the direction of the central axis of the terminal body P, projection of the protruding part 142 on the first end face 1311 falls within the region enclosed by the outer groove wall 13112b. Optionally, the axes of the groove 13112 and the protruding part 142 are on the same straight line. Optionally, the axes lines of the groove 13112 and the protruding part 142 are both on the central axis of the terminal body 131. Optionally, the protruding part 142 may also be a polygonal cylinder, and the diameter of the outer groove wall 13112b of the groove 13112 is greater than the diameter of the circumscribed circle of the end face of the polygonal cylinder.

When the groove 13112 is a polygonal ring, the protruding part 142 may be a cylinder or be correspondingly set as a polygonal cylinder: when the protruding part 142 is a cylinder, the diameter of the inscribed circle of the outer groove wall 13112b of the groove 13112 is greater than the diameter of the end face of the cylinder; and when the protruding part 142 is a polygonal cylinder, the diagonal length of the region enclosed by the outer groove wall 13112b of the groove 13112 is greater than the diagonal length of the end face of the polygonal cylinder. Therefore, the projection of the protruding part 142 on the first end face 1311 falls within the region enclosed by the outer groove wall 13112b.

Through the above arrangement, the protruding part 142 does not exceed beyond the outer groove wall 13112b in the radial direction of the terminal body R, so as to avoid interference of a structure other than the protruding part 142 and the connecting region 13111, which ensures the protruding part 142 and the connecting region 13111 are tightly connected without gaps.

According to some embodiments of the present application, as shown in FIG. 14, an inner diameter of the groove D2 is less than the diameter of the protruding part D3.

In conjunction with FIG. 8, FIG. 13 and FIG. 14, the groove 13112 is an annular ring, and the inner diameter of the groove D2 refers to the diameter of the inner groove wall 13112a of the groove 13112. The region enclosed by the inner groove wall 13112a of the groove 13112 is the connecting region 13111, the shape of the connecting region 13111 is circular, and the diameter of the groove D2 may also be understood as the diameter of the connecting region 13111. The protruding part 142 is a cylinder, and the diameter of the protruding part D3 refers to the diameter of the cylinder. The diameter of the connecting region 13111 is less than the diameter of the protruding part of the cylinder D3, so that the area of the face of the protruding part 142 facing the connecting region 13111 is greater than the area of the region enclosed by the inner groove wall 13112a of the groove 13112, that is, the face of the protruding part 142 facing the connecting region 13111 completely covers the connecting region 13111. Optionally, the protruding part 142 may also be set as a polygonal cylinder, and the diameter of the inner groove wall 13112a of the groove 13112 is less than the diameter of the inscribed circle of the end face of the polygonal cylinder.

When the groove 13112 is a polygonal ring, the shape of the connecting region 13111 is polygonal, the protruding part 142 may be a cylinder or be correspondingly set as a polygonal cylinder: when the protruding part 142 is a cylinder, the diameter of the circumscribed circle of the connecting region 13111 is less than the diameter of the end face of the cylinder. When the protruding part 142 is a polygonal cylinder, the diagonal length of the connecting region 13111 is less than the diagonal length of the end face of the polygonal cylinder.

Through the above arrangement, the face of the protruding part 142 facing the connecting region 13111 completely covers the connecting region 13111, which maximizes the use of the connecting region 13111, and maximizes the ensuring of an overcurrent area.

According to some embodiments of the present application, as shown in FIG. 13, the protruding part 142 includes an end wall 1422 and a peripheral wall 1421, the peripheral wall 1421 is disposed around the end wall 1422, the peripheral wall 1421 is connected to the current collecting body 141, the end wall 1422 is connected to the connecting region 13111, and the peripheral wall 1421 and the end wall 1422 together enclose a concave chamber 1423.

One end of the peripheral wall 1421 is connected to the current collecting body 141, the other end of the peripheral wall 1421 extends toward the electrode terminal 13 and is connected to the end wall 1422, the end wall 1422 is misaligned with the current collecting body 141, the end wall 1422 is closer to the wall part 11a relative to the current collecting body 141, one face of the first current collecting member 14 away from the wall part 11a is provided with a concave chamber 1423, and in other words, one face of the protruding part 142 away from the wall part 11a is provided as a concave chamber 1423.

The position of the protruding part 142 is marked by the concave chamber on a face of the first current collecting member 14 away from the wall part 11a, so as to weld the end wall 1422 and the connecting region 13111 from the inner side of the wall part 11a.

During welding, the concave chamber 1423 is further configured to position a welding head, so as to avoid deviation of the welding head, which ensures the stable connection between the protruding part 142 and the connecting region 13111. Compared with the case that a back face of the protruding part 142 is not provided with the concave chamber 1423, by providing the concave chamber 1423, the thickness of the portion of the protruding part 142 for connecting the connecting region 13111 is reduced, which is convenient for penetration welding.

According to some embodiments of the present application, as shown in FIG. 14, the diameter of the concave chamber D4 is greater than a diameter of the winding center hole D5.

When the back of the protruding part 142 is the concave chamber 1423, the projection of the peripheral wall 1421 on the end face of the electrode assembly 12 is annular, and the diameter of the concave chamber D4 refers to the diameter of the inner ring of the projection of the peripheral wall 1421. The concave chamber 1423 completely covers one end of the winding center hold 124, the welding head does not interfere with the current collecting body 141 after passing through the winding center hole 124, and the welding head can smoothly enter the concave chamber 1423 to weld the end wall 1422 and the connecting region 13111.

In a case that the diameter of the concave chamber 1423 is constant, by reducing the diameter of the winding center hold of the electrode assembly 12 D5 to be less than the diameter of the concave chamber D4, the space ratio of the electrode assembly 12 is increased, and energy density of the battery cell 1 is improved.

According to some embodiments of the present application, as shown in FIG. 14, one side of the electrode terminal 13 facing the first current collecting member 14 is provided with an inclined face 133, and the inclined face 133 is inclined relative to a plane perpendicular to a direction of a central axis of the electrode terminal 13 and extends from an outer groove wall 13112b of the groove 13112 in a direction close to the electrode assembly 12.

The inclined face 133 is located on one side of the electrode terminal 13 facing the first current collecting member 14, and the inclined face 133 starts from the outer groove wall 13112b, moves radially away from the central axis of the electrode terminal 13 gradually closer to electrode assembly 12. The inclined face 133 is located on the periphery of the outer groove wall 13112b of the groove 13112, and in other words, the groove 13112 is located between the connecting region 13111 and the inclined face 133.

By providing an periphery of the groove 13112 with the inclined face 133 to avoid the first current collecting member 14, when the first current collecting member 14 moves toward the first end face 1311, the inclined face 133 guides the first current collecting member 14 to move toward the connecting region 13111 to accurately position the first current collecting member 14, which ensures that the first current collecting member 14 is connected to the connecting region 13111.

According to some embodiments of the present application, as shown in FIG. 7 and FIG. 14, the electrode terminal 13 further includes a second flange 134, the second flange 134 protrudes from an outer peripheral face of the terminal body 131 in the radial direction of the terminal body R, and the second flange 134 is located on an outer side of the wall part 11a to limit movement of the electrode terminal 13 in a direction towards the electrode assembly 12.

One end of the terminal body 131 extending beyond the shell 11 is provided with the second flange 134, the second flange 134 is a protrusion disposed on the outer peripheral face of the terminal body 131, that is, the second flange 134 protrudes from the outer peripheral face of the terminal body 131 relative to the radial direction of the terminal body R. The second flange 134 directly or indirectly abuts against the outer side of the wall part 11a to prevent the terminal body 131 from moving toward the inner side of the wall part 11a. The terminal body 131 and the second flange 134 may be integrally molded, or may be two portions connected by means of welding, bonding or the like after being molded respectively. Optionally, the second flange 134 and the terminal body 131 are integrally molded.

By providing the second flange 134, under the action of the first flange 132 and the second flange 134, the movement of the electrode terminal 13 along the central axis of the terminal body 131 is limited, so that the electrode terminal 13 is positioned in the direction of the central axis of the terminal body P to avoid a shake of the electrode terminal 13, which further ensures that the electrode terminal 13 and the first current collecting member 14 are connected stably.

According to some embodiments of the present application, as shown in FIG. 14, the battery cell 1 further includes an insulating member 16, and the insulating member 16 is disposed between the electrode terminal 13 and the wall part 11a to isolate the electrode terminal 13 from the wall part 11a in an insulating manner.

The insulating member 16 includes a first portion 161, a second portion 162 and a third portion 163 connected in sequence. The first portion 161 is located between the first flange 132 and the inner side surface of the wall part 11a, and the first flange 132 indirectly abuts against the wall part 11a through the first portion 161. The second portion 162 surrounds the outer periphery of the terminal body 131, that is, the second portion 162 is located between the terminal body 131 and the inner wall of the electrode lead-out hole 11b. The third portion 163 is located between the second flange 134 and the inner side surface of the wall part 11a, and the second flange 134 indirectly abuts against the wall part 11a through the third portion 163.

The electrode terminal 13 and the wall part 11a are isolated by the insulating member 16, so as to prevent the wall part 11a from being charged, which reduces the risk of short circuit. The gap between the gap between the electrode terminal 13 and the wall part 11a is filled with the insulating member 16 to alleviate the problem of liquid leakage from the gap between the electrode terminal 13 and the wall part 11a.

According to some embodiments of the present application, one side of the second flange 134 facing the wall part 11a is provided with an annular protrusion 1341, the annular protrusion 1341 is disposed around a central axis of the electrode terminal 13, and the annular protrusion 1341 is configured to squeeze a portion of the insulating member 16 located between the second flange 134 and the wall part 11a.

In other words, at the annular protrusion 1341, the distance between the second flange 134 and the outer side surface of the wall part 11a is reduced to further press the third portion 163 of the insulating member 16 tightly toward the outer side surface of the wall part 11a, so that an annular sealing region is formed between the second flange 134 and the wall part 11a to further alleviate the problem of liquid leakage from the gap between the electrode terminal 13 and the wall part 11a.

According to some embodiments of the present application, as shown in FIG. 7, projection of the first flange 132 on the second flange 134 covers the annular protrusion 1341 in a thickness direction of the wall part 11a.

The distance between the edge of the first flange 132 and the central axis of the terminal body 131 is greater than the distance between the annular protrusion 1341 and the central axis of the terminal body 131. The annular protrusion 1341 squeezes the wall part 11a through the insulating member 16 on the outer side of the wall part 11a, and the first flange 132 supports the position where the wall part 11a is squeezed by the annular protrusion 1341 on the inner side to avoid the formation of the wall part 11a under pressure. Under the cooperation of the wall part 11a and the annular protrusion 1341, it is ensured that the insulating member 16 is pressed tightly, the gap between the electrode terminal 13 and the wall part 11a is eliminated, and the sealing effect is improved.

According to some embodiments of the present application, as shown in FIG. 5 and FIG. 6, the shell 11 includes a housing 111 and an end cover 112, the housing 111 includes a side wall 1111 and a bottom wall 1112, the side wall 1111 is disposed around the bottom wall 1112, one end of the side wall 1111 is connected to the bottom wall 1112, the other end of the side wall 1111 encloses an opening opposite to the bottom wall 1112, the end cover 112 covers the opening, and the wall part 11a is the bottom wall 1112 or the end cover 112.

The drawings of the specification of the present application show the embodiments in which the wall part 11a is the bottom wall 1112. In other embodiments, the wall part 11a may be the end cover 112, and the end cover 112 is provided with an electrode lead-out hole 11b, and the electrode terminal 13 passes through the electrode lead-out hole 11b on the end cover 112. That is, one of the bottom wall 1112 and the end cover 112 is provided with the electrode terminal 13.

According to some embodiments of the present application, as shown in FIG. 6 and FIG. 7, the electrode terminal 13 is insulated from the wall part 11a, one end of the electrode assembly 12 away from the wall part 11a is provided with a second tab 123, and a polarity of the second tab 123 is opposite to that of the first tab 122; and the battery cell 1 further includes a second current collecting member 15, and the second current collecting member 15 is configured to electrically connect the second tab 123 and the wall part 11a.

The wall part 11a is the bottom wall 1112, and the electrode terminal 13 is disposed on the bottom wall 1112 in an insulation manner, and is electrically connected to the first tab 122 of the electrode assembly 12 through the first current collecting member 14. The end cover 112 is located at one end of the side wall 1111 away from the bottom wall 1112, and the end cover 112 is connected to the side wall 1111 to close the opening. The second current collecting member 15 is located between the electrode assembly 12 and the end cover 112.

The second current collecting member 15 is configured to electrically connect the second tab 123 and the wall part 11a, which means that the second current collecting member 15 is electrically connected to the second tab 123 while the second current collecting member 15 is electrically connected to the wall part 11a, so that the second tab 123 and the wall part 11a carry charges with the same polarity.

Optionally, the second current collecting member 15 presses against the kneaded and flattened end face of the second tab 123, an external welding device emits laser light to the surface of the second current collecting member 15 away from the second tab 123, and the laser light welds the second current collecting member 15 to the second tab 123.

Optionally, the second current collecting member 15 is directly electrically connected to the housing 111 to lead out the electrical energy to the wall part 11a.

Optionally, the second current collecting member 15 may also be indirectly electrically connected to the housing 111 through the end cover 112. As shown in FIG. 5, the second current collecting member 15 is electrically connected to the end cover 112, and the end cover 112 is electrically connected to the side wall 1111. For example, the second current collecting member 15 is welded to the middle portion of the end cover 112, and the outer periphery of the end cover 112 is welded to the side wall 1111. For another example, the end cover 112 is provided with the electrode terminal 13, the second current collecting member 15 is welded to the electrode terminal 13, and the outer periphery of the end cover 112 is welded to the side wall 1111.

Through the above arrangement, the polarities of the wall part 11a and the electrode terminal 13 are opposite, and the wall part 11a and the electrode terminal 13 can be used as the positive output pole and the negative output pole of the battery cell 1, respectively, so that the bus component connects the positive output pole and the negative output pole at the same end of the battery cell 1, which facilitates the assembly. Optionally, a pressure relief mechanism may be disposed at one end away from the wall part 11a, and the pressure relief mechanism is far away from the bus component to avoid impacting the bus component when the pressure relief mechanism is released, so as to avoid damage to the bus component.

In a second aspect, an embodiment of the present application provides a battery 100, and as shown in FIG. 2 and FIG. 3, the battery 100 includes the foregoing battery cell 1.

In a third aspect, an embodiment of the present application provides a power consumption device, and as shown in FIG. 1, the power consumption device can be selected as a vehicle, and the vehicle includes the foregoing battery 100.

In a fourth aspect, an embodiment of the present application provides a producing method of a battery cell 1, and as shown in FIG. 5, FIG. 6 and FIG. 15, the producing method includes:
S101, providing an electrode assembly 12, one end of the electrode assembly 12 being provided with a first tab 122.
S102, providing a housing 111 and an electrode terminal 13, the housing 111 including a bottom wall 1112 and a side wall 1111, the side wall 1111 being disposed around the bottom wall 1112, one end of the side wall 1111 being connected to the bottom wall 1112, the other end of the side wall 1111 enclosing an opening opposite to the bottom wall 1112, the bottom wall 1112 being provided with an electrode lead-out hole 11b, the electrode terminal 13 including a terminal body 131 and a first flange 132, the terminal body 131 passing through the electrode lead-out hole 11b, the first flange 132 protruding from an outer peripheral face of the terminal body 131 in a radial direction of the terminal body R, the first flange 132 being located on an inner side of the bottom wall 1112 to limit movement of the electrode terminal 13 in a direction away from the electrode assembly 12, the terminal body 131 having a first end face 1311 facing an interior of the housing 111, the first end face 1311 being provided with a groove 13112 and a connecting region 13111 for connecting the first current collecting member 14, and the groove 13112 being located between the connecting region 13111 and the first flange 132.
S103, providing a first current collecting member 14.
S104, connecting the first current collecting member 14 to the first tab 122.
S105, placing the electrode assembly 12 and the first current collecting member 14 in the housing 111 so that the first current collecting member 14 is located between the bottom wall 1112 and the electrode assembly 12.
S106, connecting the first current collecting member 14 to the connecting region 13111.
S107, providing an end cover 112, and covering the opening of the housing 111 with the end cover 112.

It should be noted that, for the related structure of the battery cell 1 manufactured by the above manufacturing method of the battery cell 1, reference can be made to the battery cell 1 provided in the above respective embodiment.

When the battery cell 1 is assembled based on the above manufacturing method of the battery cell 1, it is not necessary to perform the above steps in sequence, that is, the steps may be performed in the order mentioned in the embodiment, or may be performed in an order different from the one mentioned in the embodiment, or the several steps are performed simultaneously. For example, steps S101 and S102 are performed in no particular order, and may also be performed simultaneously.

According to some embodiments of the present application, the step of connecting the first current collecting member 14 to the first tab 122 is done before the step of placing the electrode assembly 12 in the housing 111.

That is, step S104 is done before step S105, so that the electrode assembly 12 and the first current collecting member 14 are placed in the housing 111 together after the first current collecting member 14 and the electrode assembly 12 are integrally connected, which ensures that the first current collecting member 14 and the first tab 122 are connected stably, and improves the overcurrent capability.

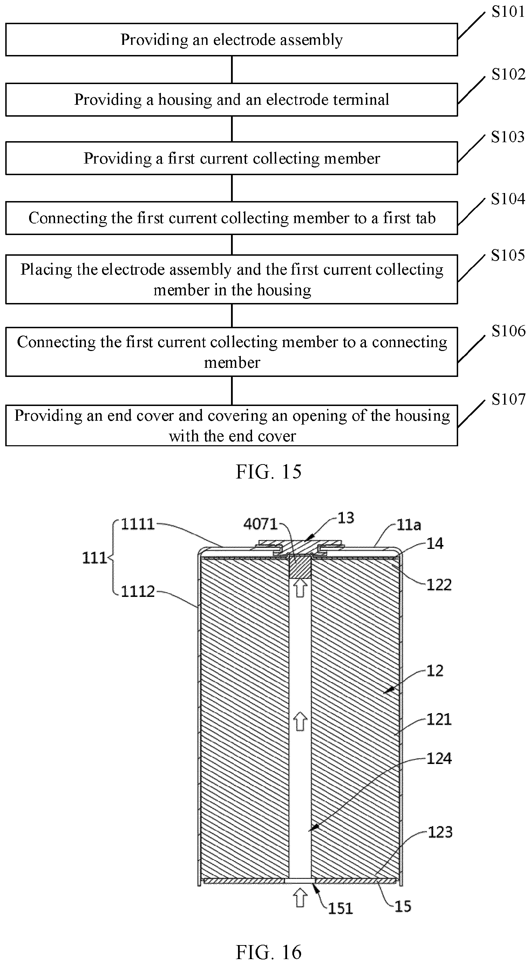

According to some embodiments of the present application, step S106 of connecting the first current collecting member 14 to the connecting region 13111 includes: as shown in FIG. 16, welding the first current collecting member 14 and the connecting region 13111 through a welding unit 4071 entering the housing 111 from the opening and passing through a winding center hole 124 of the electrode assembly 12.

In the above technical solution, a weld mark of the first current collecting member 14 and the electrode terminal 13 is located inside the battery cell 1, and the weld mark is in no contact with the outside air, and is not easily oxidized and does not rusts, which increases the service life of the battery 100.

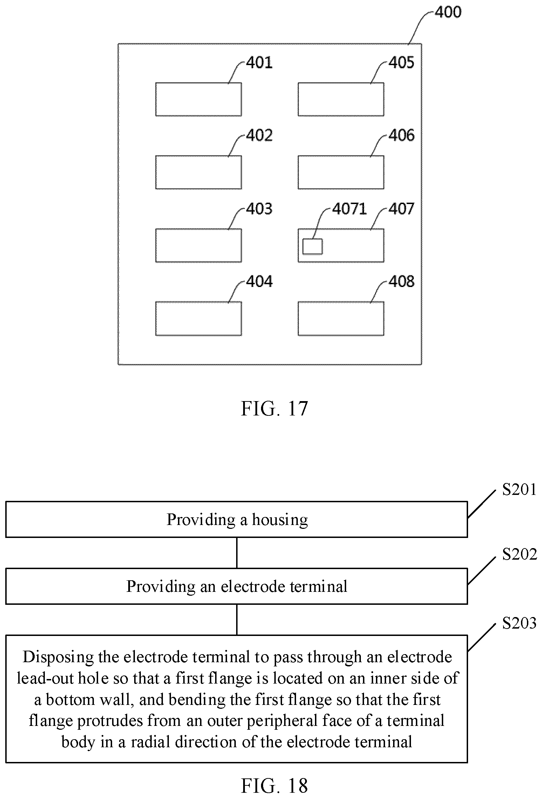

In a fifth aspect, an embodiment of the present application provides a producing apparatus 400 of a battery cell 1, as shown in FIG. 17, which includes:
a first providing apparatus 401 configured to provide an electrode assembly 12, one end of the electrode assembly 12 being provided with a first tab 122;
a second providing apparatus 402 configured to provide a housing 111 and an electrode terminal 13, the housing 111 including a bottom wall 1112 and a side wall 1111, the side wall 1111 being disposed around the bottom wall 1112, one end of the side wall 1111 being connected to the bottom wall 1112, the other end of the side wall 1111 enclosing an opening opposite to the bottom wall 1112, the bottom wall 1112 being provided with an electrode lead-out hole 11b, the electrode terminal 13 including a terminal body 131 and a first flange 132, the terminal body 131 passing through the electrode lead-out hole 11b, the first flange 132 protruding from an outer peripheral face of the terminal body 131 in a radial direction of the terminal body R, the first flange 132 being located on an inner side of the bottom wall 1112 to limit movement of the electrode terminal 13 in a direction away from the electrode assembly 12, the terminal body 131 having a first end face 1311 facing an interior of the housing 111, the first end face 1311 being provided with a groove 13112 and a connecting region 13111 for connecting the first current collecting member 14, and the groove 13112 being located between the connecting region 13111 and the first flange 132;
a third providing apparatus 403 configured to provide a first current collecting member 14;
a fourth providing apparatus 404 configured to provide an end cover 112;
a first assembling apparatus 405 configured to connect the first current collecting member 14 to the first tab 122;
a second assembling apparatus 406 configured to place the electrode assembly 12 and the first current collecting member 14 in the housing 111 so that the first current collecting member 14 is located between the wall part 1 1a and the electrode assembly 12;
a third assembling apparatus 407 configured to connect the first current collecting member 14 to the connecting region 13111;
a fourth assembling apparatus 408 configured to cover the opening of the housing 111 with the end cover 112.

The first providing apparatus 401, the second providing apparatus 402, the third providing apparatus 403, the fourth providing apparatus 404, the first assembling apparatus 405, the second assembling apparatus 406, the third assembling apparatus 407 and the fourth assembling apparatus 408 can be disposed on the same production line, the first providing apparatus 401, the second providing apparatus 402, the third providing apparatus 403 and the fourth providing apparatus 404 can be transfer apparatuses on the production line, and the first assembling apparatus 405, the second assembling apparatus 406, the third assembling apparatus 407 and the fourth assembling apparatus 408 assemble the transferred components to form the battery cell 1.

According to some embodiments of the present application, the third assembling apparatus 407 is configured to weld the first current collecting member 14 to the connecting region 13111, the third assembling apparatus 407 includes a welding unit 4071, and the welding unit 4071 is configured to enter the housing 111 and pass through a winding center hole 124 of the electrode assembly 12 to weld the first current collecting member 14 and the connecting region 13111.

Optionally, the welding unit 4071 is an ultrasonic welding head, the ultrasonic welding head passes through the winding center hole 124 of the electrode assembly 12 and acts on the first current collecting member 14 to weld the first current collecting member 14 to the connecting region 13111.

For the related structure of the battery cell 1 manufactured by the above producing apparatus 400, reference can be made to the battery cell 1 provided in the above respective embodiment.

It should be noted that, the embodiments in the present application and features in the embodiments may be mutually combined in case of no conflict.

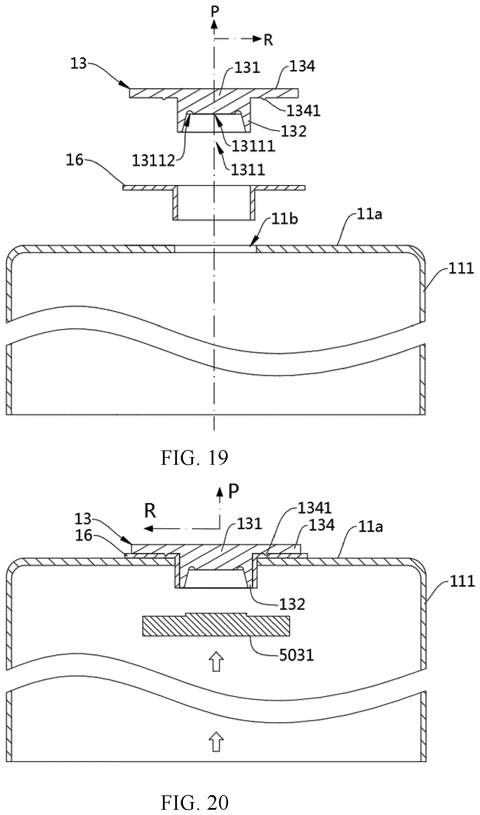

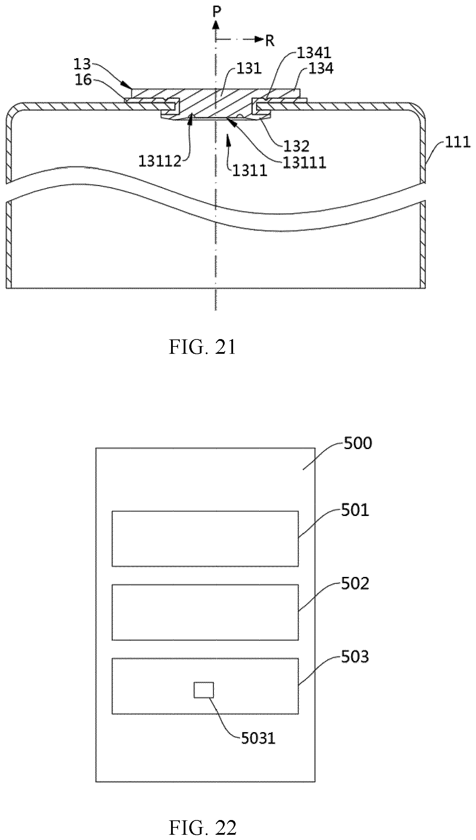

In a sixth aspect, an embodiment of the present application provides an assembling method of a housing 111 and an electrode terminal 13, and as shown in FIG. 18, the assembling method includes:
S201, as shown in FIG. 19, providing a housing 111, the housing 111 including a bottom wall 1112 and a side wall 1111, the side wall 1111 being disposed around the bottom wall 1112, one end of the side wall 1111 being connected to the bottom wall 1112, the other end of the side wall 1111 enclosing an opening opposite to the bottom wall 1112, and the bottom wall 1112 being provided with an electrode lead-out hole 11b;
S202, as shown in FIG. 19, providing an electrode terminal 13, the electrode terminal 13 including a terminal body 131 and a first flange 132, the terminal body 131 having a first end face 1311, the first flange 132 protruding from the first end face 1311 in a direction of a central axis of the terminal body P, the first flange 132 being disposed around the first end face 1311, the first end face 1311 being provided with a groove 13112 and a connecting region 13111, and the groove 13112 being located between the connecting region 13111 and the first flange 132;
S203, as shown in FIG. 20, passing the electrode terminal through the electrode lead-out hole 11b so that the first flange 132 is located on an inner side of the bottom wall 1112, and as shown in FIG. 21, bending the first flange 132 so that the first flange 132 protrudes from an outer peripheral face of the terminal body 131 in a radial direction of the electrode terminal 13 to limit movement of the electrode terminal 13 toward an outer side of the bottom wall 1112 through the first flange 132.

As shown in FIG. 20, before assembly, the first flange 132 protrudes from the first end face 1311 in the direction of the central axis direction of the terminal body P, so that one end of the electrode terminal 13 having the first flange 132 can pass through the electrode lead-out hole 11b and be located on the inner side of the bottom wall 1112.

As shown in FIG. 21, during assembly, the first flange 132 is folded outward, so that the first flange 132 protrudes from an outer peripheral face of the terminal body 131 in a radial direction of the terminal body R to limit movement of the electrode terminal 13 toward an outer side of the bottom wall 1112 through the first flange 132.

This assembling method achieves the installation of the electrode terminal 13 and the housing 111, and also increases the space in the vicinity of the connecting region 13111 so as to connect the first current collecting member 14. Since the first end face 1311 of the terminal body 131 is provided with the groove 13112, the stress is released by the first flange 132 at the groove 13112 in the process of bending the first flange 132, which avoids transfer of the stress to the connecting region 13111, and ensures the flatness the connecting region 13111. Moreover, the first flange 132 is squeezed in the process of bending the first flange 132, the material flows to the surroundings, and since the groove 13112 is provided between the first flange 132 and the connecting region 13111, the flowing material is squeezed and then absorbed by the groove 13112, which avoids the entrance of the material to the connecting region 13111, and ensures that the connecting region 13111 is flat and not deformed.

Specifically, in step S203, the first flange 132 is bent by means of compressing the first flange 132 in the direction of the central axis of the terminal body P, so that the electrode terminal 13 is riveted on the bottom wall 1112.

In a seventh aspect, an embodiment of the present application provides an assembling apparatus 500 of a housing 111 and an electrode terminal 13, and as shown in FIGS. 19-22, the assembling apparatus 500 includes:
a fifth providing apparatus 501 configured to provide a housing 111, the housing 111 including a bottom wall 1112 and a side wall 1111, the side wall 1111 being disposed around the bottom wall 1112, one end of the side wall 1111 being connected to the bottom wall 1112, the other end of the side wall 1111 enclosing an opening opposite to the bottom wall 1112, and the bottom wall 1112 being provided with an electrode lead-out hole 11b;
a sixth providing apparatus 502 configured to provide an electrode terminal 13, the electrode terminal 13 including a terminal body 131 and a first flange 132, the terminal body 131 having a first end face 1311, the first flange 132 protruding from the first end face 1311 in a direction of a central axis of the terminal body P, the first flange 132 being disposed around the first end face 1311, the first end face 1311 being provided with a groove 13112 and a connecting region 13111, and the groove 13112 being located between the connecting region 13111 and the first flange 132;
a fifth assembling apparatus 503 configured to pass the electrode terminal through the electrode lead-out hole 11b so that the first flange 132 is located on an inner side of the wall part 11a, and to bend the first flange 132 so that the first flange 132 protrudes from an outer peripheral face of the terminal body 131 in a radial direction of the electrode terminal 13 to limit movement of the electrode terminal 13 toward an outer side of the wall part 11a through the first flange 132.

Specifically, the fifth assembling apparatus 503 includes a compressing mechanism 5031, the compressing mechanism 5031 is configured to enter the interior of the housing 111 from the opening of the housing 111 and to compress the first flange 132 in the direction of the central axis of the terminal body P to bend the first flange 132 so that the electrode terminal 13 is riveted on the bottom wall 1112.

According to some embodiments of the present application, with reference to FIGS. 5 to 6 and FIG. 14, an embodiment of the present application provides a battery cell 1, the battery cell 1 includes a shell 11, an electrode terminal 13, an electrode assembly 12, a first current collecting member 14 and a second current collecting member 15.

The shell 11 includes a housing 111 and an end cover 112, the housing 111 includes a bottom wall and a side wall, the side wall 1111 is disposed around the bottom wall, one end of the side wall 1111 is connected to the bottom wall 1112, the other end of the side wall 1111 encloses an opening opposite to the bottom wall 1112, the end cover 112 covers the opening, and the bottom wall 1112 is provided with an electrode lead-out hole 11b for mounting the electrode terminal 13. The electrode terminal 13 includes a terminal body 131, a first flange 132 and a second flange 134, the first flange 132 and the second flange 134 respectively protrude from outer peripheral faces of the terminal body 131 in a radial direction, the electrode terminal 13 passes through the electrode lead-out hole 11b, the first flange 132 is located on an inner side of the bottom wall 1112, the first flange 132 is configured to limit movement of the terminal body 131 toward an outer side of the bottom wall 1112, the second flange 134 is located on the outer side of the bottom wall 1112, and the second flange 134 is configured to limit movement of the terminal body 131 toward the inner side of the bottom wall 1112. One end face the terminal body 131 facing one side of the electrode assembly 12 is a first end face 1311, the first end face 1311 is provided with a groove 13112 and a connecting region 13111, the groove 13112 is an annular groove disposed between the connecting region 13111 and the first flange 132, and the groove 13112 is configured to allow the first flange 132 to release stress and be deformed to limit transfer of the stress received by the first flange 132 to the connecting region 13111, which ensures the flatness of the connecting region 13111. An insulating member 16 is provided between the electrode terminal 13 and the bottom wall 1112, and the insulating member 16 is configured to isolate the electrode terminal 13 from the bottom wall 1112 in an insulating manner. One side of the second flange 134 facing the bottom wall 1112 is provided with an annular protrusion 1341, the annular protrusion 1341 squeezes the insulating member 16 on the outer side of the bottom wall 1112 to form an annular sealing region to seal the shell 11, projection of the first flange 132 on the second flange 134 covers the annular protrusion 1341, and the first flange 132 supports the bottom wall 1112 on the inner side of the bottom wall 1112, which prevents the bottom wall 1112 from being deformed under pressure, and ensures the sealing effect.

The first current collecting member 14, the second current collecting member 15 and the electrode assembly 12 are located in the shell 11, the electrode assembly 12 is a winding structure, one end of the electrode assembly 12 facing the bottom wall 1112 is provided with a first tab 122, one end of the electrode assembly 12 facing the end cover 112 is provided with a second tab 123, the first current collecting member 14 is configured to connect the first tab 122 of the electrode assembly 12, and the second current collecting member 15 is configured to connect the second tab 123 of the electrode assembly 12. The first current collecting member 14 includes a current collecting body 141 and a protruding part 142, the current collecting body 141 is connected to the first tab 122, the protruding part 142 includes an end wall 1422 and a peripheral wall 1421, the peripheral wall 1421 is disposed around the end wall 1422, the peripheral wall 1421 and the end wall 1422 together enclose a concave chamber 1423, and the peripheral wall 1421 is connected to the current collecting body 141, so that the end wall 1422 protrudes in the direction of the electrode terminal 13 relative to the current collecting body 141, and the end wall 1422 is connected to the connecting region 13111. The protruding part 142 and the groove 13112 satisfy: the inner diameter of the groove D2 < the diameter of the protruding part D3 < the outer diameter of the groove D1. Meanwhile, the diameter of the concave chamber D4 > the diameter of the winding center hole of the electrode assembly 12 D5. The second current collecting member 15 is connected to the second tab 123, the second current collecting member 15 is provided with a through hole 151 corresponding to the winding center hole 124 of the electrode assembly 12, and one end of the second current collecting member 15 away from the electrode assembly 12 is connected to the end cover 112, so that the side wall 1111 and the bottom wall 1112 are charged.

Through the above arrangement, the polarities of the electrode terminal 13 and the bottom wall 1112 are opposite, and the electrode terminal 13 and the bottom wall 1112 can be used as the positive output pole and the negative output pole of the battery cell 1, respectively, so as to connect a bus component at the same end of the battery cell 1.

An embodiment of the present application further provides a producing method of the above battery cell 1, and with reference to FIG. 5, FIG. 6 and FIG. 15, the producing method of the battery cell 1 includes: providing an electrode assembly 12, providing assembled housing 111 and electrode terminal 13 (with reference to FIG. 21), providing a first current collecting member 14, providing a second current collecting member 15, and providing an end cover 112; connecting the first current collecting member 14 to a first tab 122, connecting the second current collecting member 15 to a second tab 123, and then placing the electrode assembly 12, the first current collecting member 14 and the second current collecting member 15 integrally in a shell 11, so that the first current collecting member 14 is located between the bottom wall 1112 and the electrode assembly 12; putting a welding unit (for example, an ultrasonic welding head) to enter the housing 111 from an opening, and pass through a through hold 151 on the second current collecting member 15 and a winding center hole 124 of the electrode assembly 12 in sequence to enter a concave chamber 1423 and to act on an end wall 1422 to weld the end wall 1422 to a connecting region 13111, so as to achieve the electrical connection between the first current collecting member 14 and the electrode terminal 13; and covering the opening with the end cover 112.

The assembling method of a housing 111 and an electrode terminal 13, with reference to FIGS. 18-21, includes: providing a housing 111, as shown in FIG. 19, the housing 111 including a bottom wall 1112 and a side wall 1111, the side wall 1111 being disposed around the bottom wall 1112, one end of the side wall 1111 being connected to the bottom wall 1112, the other end of the side wall 1111 enclosing an opening opposite to the bottom wall 1112, and the bottom wall 1112 being provided with an electrode lead-out hole 11b; providing an electrode terminal 13, as shown in FIG. 19, the electrode terminal 13 including a terminal body 131 and a first flange 132, the terminal body 131 having a first end face 1311, the first flange 132 protruding from the first end face 1311 in a direction of a central axis of the terminal body P, the first flange 132 being disposed around the first end face 1311, the first end face 1311 being provided with a groove 13112 and a connecting region 13111, and the groove 13112 being located between the connecting region 13111 and the first flange 132; and as shown in FIG. 20, passing the electrode terminal through the electrode lead-out hole 11b so that the first flange 132 is located on an inner side of the wall part 11a, and as shown in FIG. 21, bending the first flange 132 so that the first flange 132 protrudes from an outer peripheral face of the terminal body 131 in a radial direction of the electrode terminal 13 to limit movement of the electrode terminal 13 toward an outer side of the wall part 11a through the first flange 132.

The foregoing descriptions are only preferred embodiments of the present application, and are not intended to limit the present application. For those skilled in the field, the present application may have various modifications and changes. Any modification, equivalent substitution, improvement or the like, made within the spirit and principle of the present application shall fall within the protection scope of the present application.

## Claims

1. A battery cell, comprising:
a shell comprising a wall part, the wall part being provided with an electrode lead-out hole;
an electrode assembly disposed inside the shell, one end of the electrode assembly facing the wall part being provided with a first tab;
an electrode terminal comprising a terminal body and a first flange, the terminal body passing through the electrode lead-out hole, the first flange protruding from an outer peripheral face of the terminal body in a radial direction of the terminal body, and the first flange being located on an inner side of the wall part to limit movement of the electrode terminal in a direction away from the electrode assembly; and
a first current collecting member located between the wall part and the electrode assembly and configured to connect the electrode terminal and the first tab;
wherein the terminal body has a first end face facing the first current collecting member, the first end face is provided with a groove and a connecting region for connecting the first current collecting member, and the groove is located between the connecting region and the first flange.

2. The battery cell according to claim 1, wherein the groove is an annular groove disposed around an outer periphery of the connecting region.

3. The battery cell according to claim 2, wherein the electrode assembly is a winding structure, and the first current collecting member covers a winding center hole of the electrode assembly.

4. The battery cell according to claim 3, wherein the first current collecting member comprises a current collecting body and a protruding part, the protruding part protrudes from the current collecting body in a direction of the electrode terminal, the protruding part corresponds to a position of the winding center hole of the electrode assembly and is configured to connect the connecting region, and the current collecting body is configured to connect the first tab.

5. The battery cell according to claim 4, wherein an outer diameter of the groove is greater than a diameter of the protruding part.

6. The battery cell according to claim 4 or 5, wherein an inner diameter of the groove is less than a diameter of the protruding part.

7. The battery cell according to any one of claims 4-6, wherein the protruding part comprises an end wall and a peripheral wall, the peripheral wall is disposed around the end wall, the peripheral wall is connected to the current collecting body, the end wall is connected to the connecting region, and the peripheral wall and the end wall together enclose a concave chamber.

8. The battery cell according to claim 7, wherein a diameter of the concave chamber is greater than a diameter of the winding center hole.

9. The battery cell according to any one of claims 1-8, wherein one side of the electrode terminal facing the first current collecting member is provided with an inclined face, and the inclined face is inclined relative to a plane perpendicular to a direction of a central axis of the electrode terminal and extends from an outer groove wall of the groove in a direction close to the electrode assembly.

10. The battery cell according to any one of claims 1 to 9, wherein the electrode terminal further comprises a second flange, the second flange protrudes from an outer peripheral face of the terminal body in the radial direction of the terminal body, and the second flange is located on an outer side of the wall part to limit movement of the electrode terminal in a direction of the electrode assembly.

11. The battery cell according to claim 10, wherein the battery cell further comprises an insulating member, and the insulating member is disposed between the electrode terminal and the wall part to isolate the electrode terminal from the wall part in an insulating manner.

12. The battery cell according to claim 11, wherein one side of the second flange facing the wall part is provided with an annular protrusion, the annular protrusion is disposed around a central axis of the electrode terminal, and the annular protrusion is configured to squeeze a portion of the insulating member located between the second flange and the wall part.

13. The battery cell according to claim 12, wherein projection of the first flange on the second flange covers the annular protrusion in a thickness direction of the wall part.

14. The battery cell according to any one of claims 1-13, wherein the shell comprises a housing and an end cover, the housing comprises a bottom wall and a side wall, the side wall is disposed around the bottom wall, one end of the side wall is connected to the bottom wall, the other end of the side wall encloses an opening opposite to the bottom wall, the end cover covers the opening, and the wall part is the bottom wall or the end cover.

15. The battery cell according to any one of claims 1-14, wherein the electrode terminal is insulated from the wall part, one end of the electrode assembly away from the wall part is provided with a second tab, and a polarity of the second tab is opposite to that of the first tab; and
the battery cell further comprises a second current collecting member, and the second current collecting member is configured to electrically connect the second tab and the wall part.

16. A battery, comprising the battery cell according to any one of claims 1-15.

17. A power consumption device, comprising the battery according to claim 16.

18. A producing method of a battery cell, comprising:
providing an electrode assembly, one end of the electrode assembly being provided with a first tab;
providing a housing and an electrode terminal, the housing comprising a bottom wall and a side wall, the side wall being disposed around the bottom wall, one end of the side wall being connected to the bottom wall, the other end of the side wall enclosing an opening opposite to the bottom wall, the bottom wall being provided with an electrode lead-out hole, the electrode terminal comprising a terminal body and a first flange, the terminal body passing through the electrode lead-out hole, the first flange protruding from an outer peripheral face of the terminal body in a radial direction of the terminal body, the first flange being located on an inner side of the bottom wall to limit movement of the electrode terminal in a direction away from the electrode assembly, the terminal body having a first end face facing an interior of the housing, the first end face being provided with a groove and a connecting region, and the groove being located between the connecting region and the first flange;
providing a first current collecting member, and connecting the first current collecting member to the first tab;
placing the electrode assembly and the first current collecting member in the housing so that the first current collecting member is located between the bottom wall and the electrode assembly;
connecting the first current collecting member to the connecting region; and
providing an end cover, and covering the opening of the housing with the end cover.

19. The producing method of the battery cell according to claim 18, wherein the step of connecting the first current collecting member to the first tab is done before the step of placing the electrode assembly in the housing.

20. The producing method of the battery cell according to claim 18 or 19, wherein
the connecting the first current collecting member to the connecting region comprises:
welding the first current collecting member and the connecting region through a welding unit entering the housing from the opening and passing through a winding center hole of the electrode assembly.

21. A producing apparatus of a battery cell, comprising:
a first providing apparatus configured to provide an electrode assembly, one end of the electrode assembly being provided with a first tab;
a second providing apparatus configured to provide a housing and an electrode terminal, the housing comprising a bottom wall and a side wall, the side wall being disposed around the bottom wall, one end of the side wall being connected to the bottom wall, the other end of the side wall enclosing an opening opposite to the bottom wall, the bottom wall being provided with an electrode lead-out hole, the electrode terminal comprising a terminal body and a first flange, the terminal body passing through the electrode lead-out hole, the first flange protruding from an outer peripheral face of the terminal body in a radial direction of the terminal body, the first flange being located on an inner side of the bottom wall to limit movement of the electrode terminal in a direction away from the electrode assembly, the terminal body having a first end face facing an interior of the housing, the first end face being provided with a groove and a connecting region, and the groove being located between the connecting region and the first flange;
a third providing apparatus configured to provide a first current collecting member;
a fourth providing apparatus configured to provide an end cover; and
a first assembling apparatus configured to connect the first current collecting member to the first tab;
a second assembling apparatus configured to place the electrode assembly and the first current collecting member in the housing so that the first current collecting member is located between the bottom wall and the electrode assembly;
a third assembling apparatus configured to connect the first current collecting member to the connecting region; and
a fourth assembling apparatus configured to cover the opening of the housing with the end cover.

22. The producing apparatus of the battery cell according to claim 21, wherein the third assembling apparatus is configured to weld the first current collecting member to the connecting region, the third assembling apparatus comprises a welding unit, and the welding unit is configured to enter the housing and pass through a winding center hole of the electrode assembly to weld the first current collecting member and the connecting region.

23. An assembling method of a housing and an electrode terminal, comprising:
providing a housing, the housing comprising a bottom wall and a side wall, the side wall being disposed around the bottom wall, one end of the side wall being connected to the bottom wall, the other end of the side wall enclosing an opening opposite to the bottom wall, and the bottom wall being provided with an electrode lead-out hole;
providing an electrode terminal, the electrode terminal comprising a terminal body and a first flange, the terminal body having a first end face, the first flange protruding from the first end face in a direction of a central axis of the terminal body, the first flange being disposed around the first end face, the first end face being provided with a groove and a connecting region, and the groove being located between the connecting region and the first flange; and
passing the electrode terminal through the electrode lead-out hole so that the first flange is located on an inner side of the bottom wall, and bending the first flange so that the first flange protrudes from an outer peripheral face of the terminal body in a radial direction of the electrode terminal to limit movement of the electrode terminal toward an outer side of the bottom wall through the first flange.

24. An assembling apparatus of a housing and an electrode terminal, comprising:
a fifth providing apparatus configured to provide a housing, the housing comprising a bottom wall and a side wall, the side wall being disposed around the bottom wall, one end of the side wall being connected to the bottom wall, the other end of the side wall enclosing an opening opposite to the bottom wall, and the bottom wall being provided with an electrode lead-out hole;
a sixth providing apparatus configured to provide an electrode terminal, the electrode terminal comprising a terminal body and a first flange, the terminal body having a first end face, the first flange protruding from the first end face in a direction of a central axis of the terminal body, the first flange being disposed around the first end face, the first end face being provided with a groove and a connecting region, and the groove being located between the connecting region and the first flange; and
a fifth assembling apparatus configured to pass the electrode terminal through the electrode lead-out hole so that the first flange is located on an inner side of the bottom wall, and to bend the first flange so that the first flange protrudes from an outer peripheral face of the terminal body in a radial direction of the electrode terminal to limit movement of the electrode terminal toward an outer side of the bottom wall through the first flange.
